# DEMANDE DE BREVET EUROPEEN

(11) **EP 1 549 070 A1**
(43) Date de publication de la demande: **29.06.2005**
(21) Numéro de dépôt: 04106642.4
(22) Date de dépôt: 16.12.2004
(51) Int. Cl.: H04N 7/167, H04N 7/16, H04H 1/00

(54) **Procédé de protection contre le détournement d'un multiplex et système de diffusion pour mettre en oeuvre ce procédé**

(30) Priorité: 19.12.2003 FR 0351129
(71) Demandeur: Viaccess, 92057 Paris La Défense Cedex (FR)
(72) Inventeur: Vigarie, Jean-Pierre, 35510 Cesson-Sevigne (FR)
(74) Mandataire: Poulin, Gérard

(57) **Abrégé**

L'invention concerne un procédé de protection contre le détournement d'un multiplex transmis par un opérateur à au moins un abonné, comportant les étapes suivantes :
à l'émission,
   - associer audit multiplex au moins un message d'authentification sécurisé par une fonction cryptographique susceptible d'être générée exclusivement par l'opérateur,
   - associer audit message au moins une donnée variable dont l'évolution au cours du temps est prédéfinie par l'opérateur,
et à la réception,
   - analyser le message d'authentification,
   - autoriser l'accès au multiplex si ledit message est authentique et intègre, et si l'évolution de la donnée variable est cohérente
   - sinon, interdire l'accès multiplex.

## Description

### DOMAINE TECHNIQUE

L'invention se situe dans le domaine de la protection de contenu et concerne plus spécifiquement un procédé de protection contre le détournement d'un multiplex transmis par un opérateur à au moins un terminal récepteur.

L'invention concerne également un système de diffusion comportant un émetteur et un récepteur adaptés pour mettre en oeuvre le procédé.

### ÉTAT DE LA TECHNIQUE ANTÉRIEURE

Pour protéger des contenus diffusés, les opérateurs utilisent des techniques de contrôle d'accès basées sur l'embrouillage des contenus diffusés au moyen de clés secrètes transmises aux abonnés avec des conditions d'accès prédéfinies. A la réception, le désembrouillage des contenus est autorisé si les conditions d'accès sont vérifiées par le terminal récepteur.

Avec ces systèmes, les opérateurs peuvent également contrôler le mode d'usage par les terminaux récepteurs du contenu diffusé. Cependant, ces systèmes ne permettent pas d'empêcher le détournement d'un multiplex diffusé, en clair ou sous forme embrouillée et de son remplacement par un multiplex pirate.

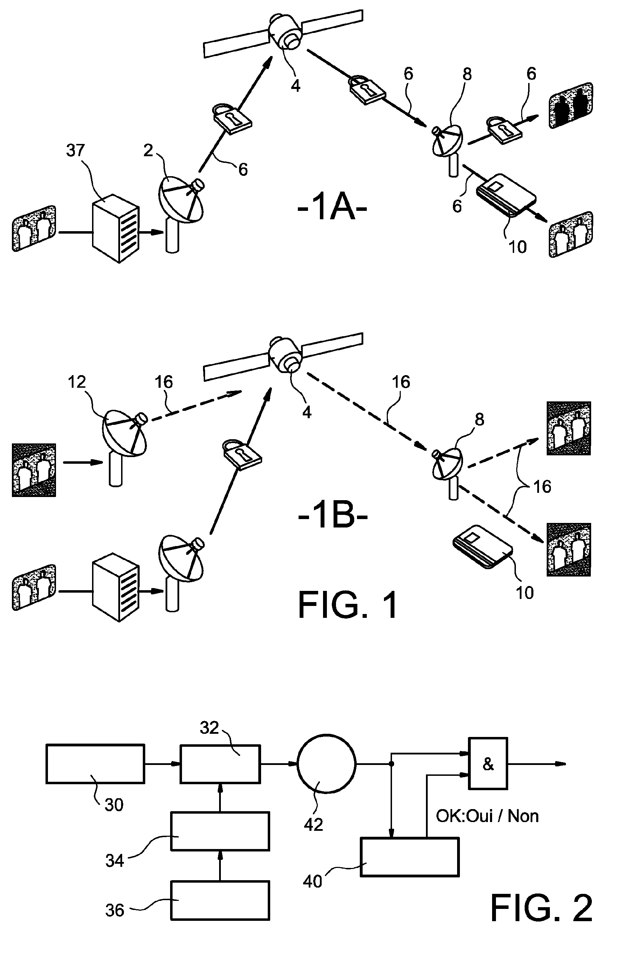

La figure 1a illustre schématiquement la diffusion satellitaire d'un multiplex comportant des programmes audiovisuels et le détournement frauduleux possible de ce multiplex. Cette situation est également applicable à tout autre système de diffusion, tel que la diffusion par réseau terrestre, ou par réseau câblé.

En référence à la figure 1A, l'émetteur 2 transmet au satellite 4 un multiplex 6 préalablement embrouillé par un dispositif cryptographique 7 et dont le contenu comprend des tables décrivant les programmes, les composantes des programmes et les données d'accès conditionnel. Le satellite 4 diffuse le multiplex dans la zone d'un terminal récepteur 8 muni d'un processeur de sécurité 10.

A l'émission, comme cela est illustré par la figure 1B, un émetteur pirate 12 peut remplacer le multiplex authentique par un multiplex pirate 16 qui sera diffusé par le satellite 4 au terminal récepteur 8 dans la mesure où, au niveau radiofréquence, aucune information de modulation/démodulation ne permet de détecter cette substitution.

Dans l'art antérieur, la détection d'une telle substitution par le terminal récepteur 8 est basée sur la vérification de la conformité du contenu des tables décrivant les programmes diffusés avec des tables pré-définies par l'opérateur. Cette conformité peut être testée sur de multiples paramètres tels que les identifiants du réseau, la valeur des adresses de voies paquets (PID) utilisées, etc.... Cependant il est possible avec les équipements de métrologie usuels de saisir dans un signal réel tous ces paramètres et de les recopier pour reconstituer un signal identique rendant une détection de ce type inopérante.

Une autre possibilité de détection, assurée au niveau du terminal récepteur par le système de contrôle d'accès, consiste à vérifier la présence et l'intégrité des messages d'accès conditionnel ECM (pour Entitlement Control Message) associés aux programmes. Cependant, cette détection est impossible lorsque l'opérateur diffuse un programme en clair ne comportant pas d'ECM. En outre, les messages d'accès conditionnel et les données constituant les tables peuvent aisément être enregistrées dans un signal réel puis associée artificiellement à un programme pirate en clair.

Le but de l'invention est d'empêcher le détournement d'un multiplex en cours de diffusion et le remplacement de ce multiplex par un multiplex pirate.

### EXPOSÉ DE L'INVENTION

A cet effet, l'invention préconise un procédé permettant une détection du remplacement d'un multiplex à partir d'une analyse du contenu de ce multiplex.

Le procédé selon l'invention comporte les étapes suivantes :
A l'émission,
   - associer au multiplex en cours de diffusion au moins un message d'authentification sécurisé par une fonction cryptographique susceptible d'être générée exclusivement par l'opérateur,
   - associer audit message au moins une donnée variable dont l'évolution au cours du temps est prédéfinie par l'opérateur,
et à la réception,
   - analyser le message d'authentification,
   - autoriser l'accès au multiplex si ledit message est authentique et intègre, et
   - sinon, interdire l'accès multiplex.

Le procédé selon l'invention comporte en outre une étape consistant à vérifier la cohérence temporelle de ladite donnée variable.

Dans un premier mode de réalisation, la sécurisation dudit message d'authentification est réalisée au moyen d'une clé secrète symétrique.

Dans un deuxième mode de réalisation, la sécurisation dudit message d'authentification est réalisée au moyen d'une clé privée asymétrique.

Dans les deux modes de réalisation, la donnée variable peut être constituée par la date courante ou par l'état d'un compteur.

Le procédé selon l'invention s'applique notamment à un multiplex comportant au moins une composante vidéo ou une composante audio codées selon la norme MPEG (pour Moving Picture Experts Group) ou au moins une composante audio codée selon la norme DAB (pour Digital Audio Broadcasting). Ces composantes peuvent être toutes ou en partie embrouillées et le message d'authentification peut être intégré à une composante quelconque, vidéo, audio ou de données du multiplex. Notons que ce message peut être associé individuellement à chaque programme du multiplex ou globalement à l'ensemble du multiplex.

Dans une première variante, le message d'authentification est inséré dans un flux privé spécifique dédié à la fonction d'authentification.

Dans une deuxième variante, le message authentification est inséré en tant que descripteur privé dans une table de description des services transportés par le multiplex.

Lorsque le multiplex transporte des programmes audiovisuels tous ou en partie embrouillés, le message authentification peut être véhiculé par un message ECM associé à un programme du multiplex, ou par un message EMM (pour Entitlement Management Message) associé à l'ensemble du multiplex.

Il peut également être constitué par un bloc de données inséré dans un message ECM ou dans un message EMM pré-éxistants.

Le système de diffusion de multiplex selon l'invention comporte :
- un émetteur muni de moyens pour associer audit multiplex au moins un message d'authentification sécurisé par une fonction cryptographique et des moyens pour associer audit message au moins une donnée variable dont l'évolution au cours du temps est prédéfinie,
- un récepteur comportant des moyens pour vérifier si ledit message est authentique et intègre, et des moyens pour vérifier la cohérence temporelle de ladite donnée variable.

L'invention concerne également un émetteur comportant des moyens pour associer aux multiplex émis au moins un message authentification sécurisé par une fonction cryptographique et des moyens pour associer audit message au moins une donnée variable dont l'évolution au cours du temps est prédéfinie.

Préférentiellement, ladite fonction cryptographique est susceptible d'être générée exclusivement par l'opérateur.

Le récepteur selon l'invention, comporte des moyens pour vérifier l'authenticité et l'intégrité dudit message, et des moyens pour vérifier la cohérence temporelle de ladite donnée variable.

### BRÈVE DESCRIPTION DES DESSINS

D'autres caractéristiques et avantages de l'invention ressortiront de la description qui va suivre, prise à titre d'exemple non limitatif en référence aux figures annexées dans lesquelles :
- les figures 1A et 1B décrites précédemment illustrent schématiquement la diffusion d'un multiplex et le détournement frauduleux de ce multiplex.
- la figure 2 représente un schéma bloc illustrant les différents modules destinés à mettre en oeuvre le procédé selon l'invention dans un système de diffusion,
- la figure 3 représente un organigramme illustrant les étapes de contrôle de l'authenticité d'un multiplex par le terminal récepteur.
- la figure 4 représente la structure d'un message d'authentification de multiplex selon l'invention.

### EXPOSÉ DÉTAILLÉ DE MODES DE RÉALISATION PARTICULIERS

L'invention sera décrite dans le cadre d'une diffusion d'un multiplex comportant une composante vidéo codée selon la norme MPEG ou une composante audio codée selon la norme MPEG, toutes ou en partie embrouillées.

En référence à la figure 2, côté émission, le système destiné à mettre en oeuvre le procédé comporte un module d'embrouillage 30, un multiplexeur 32, un générateur de message d'authentification 34 et un générateur 36 de données variables au cours du temps. La génération des messages d'authentification fait appel à des solutions cryptographiques à clés connues uniquement par l'opérateur. Les algorithmes cryptographiques mis en oeuvre peuvent être à clé secrète (symétrique) ou à clé publique.

Côté réception, le système comporte un module de calcul 40 comportant un programme de vérification du message d'authentification et de la donnée variable générés respectivement par les générateurs 34 et 36.

Les programmes audiovisuels sont d'abord embrouillés totalement ou partiellement par le module 30, multiplexés avec le message d'authentification et une donnée variable générés respectivement par les générateurs 34 et 36 pour former un multiplex qui sera diffusé via un réseau de diffusion 42 à plusieurs terminaux récepteurs munis de processeurs de sécurité.

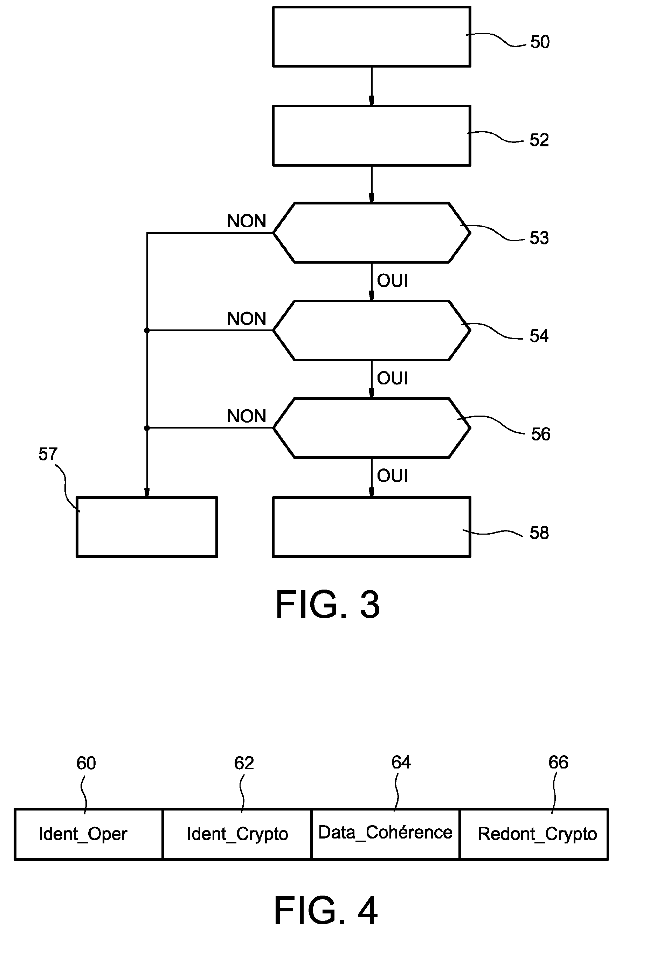

Au niveau des terminaux de réception, le module de calcul 40 analyse le multiplex reçu conformément aux étapes décrites à la figure 3 ci-après.

A l'étape 50, le multiplex est démodulé et démultiplexé, et à l'étape 52, le message d'authentification et la donnée variable qui lui est associée sont extraits du multiplex pour être analysés.

A l'étape 53, la présence du message d'authentification est vérifiée.

Si le message d'authentification n'existe pas, le module 40 interdit l'accès au multiplex. Si le message d'authentification existe, l'étape suivante 54 consiste à ce que le module de calcul 40 vérifie l'authenticité et l'intégrité du message d'authentification au moyen des clés secrètes générées à l'émission.

Cette étape a pour but de détecter la génération non autorisée de ce message.

Si le message détecté n'est pas authentique, le module 40 interdit l'accès au multiplex. Si ce message est authentique, l'étape suivante 56 consiste à vérifier la cohérence de la donnée variable associée.

Cette étape a pour but de détecter une réutilisation frauduleuse du message d'authentification préalablement extrait d'un multiplex de l'opérateur et enregistré.

Indépendamment de toute autre condition d'accès ou du fait que le programme soit en clair, l'accès au programme est refusé par l'équipement terminal (étape 57) si au moins une des conditions des étapes 53, 54 et 56 n'est pas vérifiée.

Si l'authenticité et l'intégrité du message d'authentification sont vérifiées et si la cohérence de la donnée variable est également vérifiée, le critère d'accès conditionnel classiques, éventuellement associés aux programmes du multiplex sont ensuite examinés.

La figure 4 illustre schématiquement la structure du message d'authentification. Ce dernier comporte un premier champ 60 contenant l'identifiant (*ident_oper*) de l'opérateur, un deuxième champs 62 contenant l'identifiant (*ident_Crypto*) du système cryptographique utilisé, un troisième champ 64 contenant la donnée variable (*Data_Cohérence*) utilisée pour contrôler la cohérence temporelle de la donnée variable et qui peut être en clair ou chiffré, et un quatrième champ 66 (*Redond_Crypto*) de redondance cryptographique permettant de vérifier l'authenticité et l'intégrité du message. Ce champ peut être celui du message ECM ou EMM si le message d'authentification est inséré dans l'un de ces messages ECM ou EMM.

Notons que la structure ci-dessus ne comporte pas de champ 60 contenant l'identifiant (*ident_ oper*) lorsque l'opérateur est connu implicitement, ou de champ 62 contenant l'identifiant du système cryptographique (ident_Crypto) lorsque le système cryptographique est connu implicitement.

Par ailleurs, le troisième champ 64 contenant la donnée variable (*Data_ Cohérence*) peut être en clair ou chiffré.

## Revendications

1. Procédé de protection contre le détournement d'un multiplex transmis par un opérateur à au moins un abonné, **caractérisé en ce qu'**il comporte les étapes suivantes :
à l'émission,
- associer audit multiplex au moins un message d'authentification sécurisé par une fonction cryptographique susceptible d'être générée exclusivement par l'opérateur,
- associer audit message au moins une donnée variable dont l'évolution au cours du temps est prédéfinie par l'opérateur,
et à la réception,
- analyser le message d'authentification,
- autoriser l'accès au multiplex si ledit message est authentique et intègre, et
- sinon, interdire l'accès multiplex.

2. Procédé selon la revendication 1, **caractérisé en ce qu'**il comporte en outre une étape consistant à vérifier la cohérence temporelle de ladite donnée variable.

3. Procédé selon la revendication 1 dans lequel la sécurisation dudit message d'authentification est réalisée au moyen d'une clé secrète symétrique ou d'une clé privée asymétrique.

4. Procédé selon la revendication 2, **caractérisé en ce que** ladite donnée variable est constituée par la date courante.

5. Procédé selon la revendication 2, **caractérisé en ce que** ladite donnée variable est constituée par l'état d'un compteur.

6. Procédé selon la revendication 1, **caractérisé en ce que** ledit multiplex comporte une pluralité de programmes audiovisuels.

7. Procédé selon la revendication 6, dans lequel, lesdits programmes sont tous ou en partie embrouillés.

8. Procédé selon la revendication 7, dans lequel le message d'authentification est associé individuellement à chaque programme du multiplex.

9. Procédé selon la revendication 7, dans lequel le message d'authentification est associé globalement à l'ensemble du multiplex.

10. Procédé selon l'une des revendications 8 ou 9, dans lequel le message d'authentification est inséré dans un flux privé spécifique du multiplex dédié à la fonction d'authentification.

11. Procédé selon l'une des revendications 8 ou 9, dans lequel le message d'authentification est inséré en tant que descripteur privé dans une table de description des services transportés par le multiplex.

12. Procédé selon la revendication 8 ou 9, dans lequel le multiplex comporte au moins une composante vidéo MPEG ou une composante audio MPEG.

13. Procédé selon la revendication 8 ou 9, dans lequel le multiplex comporte au moins une composante audio DAB.

14. Procédé selon l'une des revendications 12 ou 13, dans lequel le message d'authentification est intégré à une composante quelconque, vidéo, audio du multiplex.

15. Procédé selon l'une des revendications 8 ou 9, dans lequel, le message d'authentification est constitué par un message ECM associé à un programme du multiplex.

16. Procédé selon la revendication 9, dans lequel le message d'authentification est constitué par un message EMM associé à l'ensemble du multiplex.

17. Procédé selon la revendication 8 ou 9, dans lequel le message d'authentification est constitué par un bloc de données inséré dans un message ECM ou dans un message EMM pré-éxistant.

18. Système de diffusion de multiplex, **caractérisé en ce qu'**il comporte :
- un émetteur muni de moyens pour associer audit multiplex au moins un message d'authentification sécurisé par une fonction cryptographique et des moyens pour associer audit message au moins une donnée variable dont l'évolution au cours du temps est prédéfinie,
- un récepteur comportant des moyens pour vérifier si ledit message est authentique et intègre, et des moyens pour vérifier la cohérence temporelle de ladite donnée variable.

19. Emetteur de multiplex, **caractérisé en ce qu'**il comporte des moyens pour associer auxdits multiplex au moins un message d'authentification sécurisé par une fonction cryptographique et des moyens pour associer audit message au moins une donnée variable dont l'évolution au cours du temps est prédéfinie.

20. Emetteur selon la revendication 19, dans lequel ladite fonction cryptographique est susceptible d'être générée exclusivement par l'opérateur.

21. Récepteur de multiplex auquel est associé un message d'authentification contre le détournement contenant une donnée variable au cours du temps, **caractérisé en ce qu'**il comporte des moyens pour vérifier l'authenticité et l'intégrité dudit message, et des moyens pour vérifier la cohérence temporelle de ladite donnée variable.

22. Message d'authentification d'un multiplex diffusé par un opérateur, **caractérisé en ce qu'**il comporte :
- un troisième champ (64) contenant une donnée variable *Data _Cohérence* utilisée pour contrôler la cohérence des données du multiplex,
- un quatrième champs (66) *Redond_ Crypto* de redondance cryptographique permettant de vérifier l'authenticité et l'intégrité dudit message.

23. Message selon la revendication 22, **caractérisé en ce qu'**il comporte en outre :
- un premier champ (60) contenant l'identifiant *ident_ oper* de l'opérateur,
- et/ou un deuxième champ (62) contenant l'identifiant *ident_ Crypto* d'un système cryptographique.

## Revendications modifiées

### Revendications modifiées conformément à la règle 86(2) CBE.

**1.** Procédé de protection contre le détournement d'un multiplex transmis par un opérateur à au moins un terminal récepteur :
à l'émission,
- associer au multiplex en cours de diffusion au moins un message d'authentification sécurisé par une fonction cryptographique susceptible d'être générée exclusivement par l'opérateur,
- associer audit message au moins une donnée variable dont l'évolution au cours du temps est prédéfinie par l'opérateur,
et à la réception,
- analyser le message d'authentification,
- vérifier la cohérence temporelle de ladite donnée variable,
- autoriser l'accès au multiplex si ledit message est authentique et intègre, et si la cohérence de la donnée variable est également vérifiée,
- sinon, interdire l'accès multiplex.

**2.** Procédé selon la revendication 1 dans lequel la sécurisation dudit message d'authentification est réalisée au moyen d'une clé secrète symétrique ou d'une clé privée asymétrique.

**3.** Procédé selon la revendication 1, **caractérisé en ce que** ladite donnée variable est constituée par la date courante.

**4.** Procédé selon la revendication 1, **caractérisé en ce que** ladite donnée variable est constituée par l'état d'un compteur.

**5.** Procédé selon la revendication 1, **caractérisé en ce que** ledit multiplex comporte une pluralité de programmes audiovisuels.

**6.** Procédé selon la revendication 5, dans lequel, lesdits programmes sont tous ou en partie embrouillés.

**7.** Procédé selon la revendication 6, dans lequel le message d'authentification est associé individuellement à chaque programme du multiplex.

**8.** Procédé selon la revendication 6, dans lequel le message d'authentification est associé globalement à l'ensemble du multiplex.

**9.** Procédé selon l'une des revendications 7 ou 8, dans lequel le message d'authentification est inséré dans un flux privé spécifique du multiplex dédié à la fonction d'authentification.

**10.** Procédé selon l'une des revendications 7 ou 8, dans lequel le message d'authentification est inséré en tant que descripteur privé dans une table de description des services transportés par le multiplex.

**11.** Procédé selon la revendication 7 ou 8, dans lequel le multiplex comporte au moins une composante vidéo MPEG ou une composante audio MPEG.

**12.** Procédé selon la revendication 7 ou 8, dans lequel le multiplex comporte au moins une composante audio DAB.

**13.** Procédé selon l'une des revendications 11 ou 12, dans lequel le message d'authentification est intégré à une composante quelconque, vidéo, audio du multiplex.

**14.** Procédé selon l'une des revendications 7 ou 8, dans lequel, le message d'authentification est constitué par un message ECM associé à un programme du multiplex.

**15.** Procédé selon la revendication 8, dans lequel le message d'authentification est constitué par un message EMM associé à l'ensemble du multiplex.

**16.** Procédé selon la revendication 7 ou 8, dans lequel le message d'authentification est constitué par un bloc de données inséré dans un message ECM ou dans un message EMM pré-éxistant.

**17.** Système de diffusion de multiplex, **caractérisé en ce qu'**il comporte :
- un émetteur muni de moyens pour associer audit multiplex au moins un message d'authentification sécurisé par une fonction cryptographique et des moyens pour associer audit message au moins une donnée variable dont l'évolution au cours du temps est prédéfinie,
- un récepteur comportant des moyens pour vérifier si ledit message est authentique et intègre, et des moyens pour vérifier la cohérence temporelle de ladite donnée variable.

**18.** Emetteur de multiplex, **caractérisé en ce qu'**il comporte des moyens pour associer auxdits multiplex au moins un message d'authentification sécurisé par une fonction cryptographique et des moyens pour associer audit message au moins une donnée variable dont l'évolution au cours du temps est prédéfinie.

**19.** Emetteur selon la revendication 18, dans lequel ladite fonction cryptographique est susceptible d'être générée exclusivement par l'opérateur.

**20.** Récepteur de multiplex auquel est associé un message d'authentification contre le détournement contenant une donnée variable au cours du temps, **caractérisé en ce qu'**il comporte des moyens pour vérifier l'authenticité et l'intégrité dudit message, et des moyens pour vérifier la cohérence temporelle de ladite donnée variable.

**21.** Message d'authentification d'un multiplex diffusé par un opérateur, **caractérisé en ce qu'**il comporte :
- un troisième champ (64) contenant une donnée variable *Data_Cohérence* utilisée pour contrôler la cohérence des données du multiplex,
- un quatrième champs (66) *Redond_Crypto* de redondance cryptographique permettant de vérifier l'authenticité et l'intégrité dudit message.

**22.** Message selon la revendication 21, **caractérisé en ce qu'**il comporte en outre :
- un premier champ (60) contenant l'identifiant *ident_oper* de l'opérateur,
- et/ou un deuxième champ (62) contenant l'identifiant *ident_Crypto* d'un système cryptographique
